# EUROPEAN PATENT APPLICATION

(11) **EP 4 628 428 A1**
(43) Date of publication of application: **08.10.2025**
(21) Application number: 22967165.6
(22) Date of filing: 30.11.2022
(51) Int. Cl.: B65G 1/00, B65G 1/10, B65G 1/137

(54) **AUTOMATED GUIDED VEHICLE**

(71) Applicant: Fuji Corporation, Chiryu-shi, Aichi 472-8686 (JP)
(72) Inventor: SAWANAMI, Hisato, Chiryu-shi, Aichi 472-8686 (JP); KAWAGUCHI, Koji, Chiryu-shi, Aichi 472-8686 (JP); ODA, Takuya, Chiryu-shi, Aichi 472-8686 (JP)
(74) Representative: Grünecker Patent- und Rechtsanwälte PartG mbB
(86) International application number: PCT/JP2022/044203
(87) International publication number: WO 2024/116332

(57) **Abstract**

An automated guided vehicle includes: a vehicle body portion including a drive section; a coupling section configured to be detachably coupled to a cart; and a control section configured to cause the coupling section and the drive section to be coupled to a conveyance target cart from among multiple densely arranged carts and to move the conveyance target cart to be spaced apart from an adjacent cart, and then to convey the conveyance target cart to a destination.

## Description

### Technical Field

The present description discloses an automated guided vehicle.

### Background Art

Conventionally, as this type of automated guided vehicle, a conveyance AGV has been proposed in which a combining pin is fitted into a combining groove of a cart in a state where the automated guided vehicle has slipped under the cart, and thus combines with the cart to convey the cart (for example, see Patent Literature 1). A coupling ring is provided on a front surface of a base body portion of the cart, a coupling hook is provided on a rear surface of the base body portion of the cart, and multiple carts are arranged in front of and behind each other, and the carts are coupled with each other by engaging the coupling hook of the front cart with the coupling link of the rear cart. The conveyance AGV includes a rod protruding outward from the vehicle body, a lever integrally fixed to be orthogonal to the rod, and a motor for rotational operation that rotates the lever around the rod. When the two carts coupled with each other are to be separated from each other, the conveyance AGV has slipped under the front cart and is combined with the front cart, and then the coupling hook of the front cart is pushed upward by the lever, and in this state, the front cart is moved forward to separate these carts from each other and then stops.

### Citation List

### Patent Literature

Patent Literature 1:JP-A-H10-101222

### Summary of the Invention

### Technical Problem

Although Patent Literature 1 describes separating multiple carts coupled with each other by a conveyance AGV, Patent Literature 1 does not describe conveying a conveyance target cart from among multiple densely arranged carts to a destination without interfering with other carts.

A main object of the present disclosure is to convey a conveyance target cart from among multiple densely arranged carts to a destination without interfering with other carts.

### Solution to Problem

The present disclosure employs the following means in order to achieve the object described above.

The automated guided vehicle of the present disclosure is an automated guided vehicle for conveying a cart, the automated guided vehicle including:
a vehicle body portion including a drive section;
a coupling section configured to be detachably coupled to the cart; and
a control section configured to cause the coupling section and the drive section to be coupled to a conveyance target cart from among multiple densely arranged carts and to move the conveyance target cart to be spaced apart from an adjacent cart, and then to convey the conveyance target cart to a destination.

The automated guided vehicle of the present disclosure is coupled to the conveyance target cart from among the multiple densely arranged carts and moves the conveyance target cart to be spaced apart from an adjacent cart, and conveys then the conveyance target cart to the destination. Accordingly, it is possible to convey the conveyance target cart from among multiple densely arranged carts to the destination without interfering with other carts.

### Brief Description of Drawings

Fig. 1 is an external perspective view of multiple caged carts densely arranged in a cart storage area and an automated guided vehicle that conveys the caged carts.
Fig. 2 is an external perspective view of the automated guided vehicle.
Fig. 3 is a side view of the automated guided vehicle.
Fig. 4 is a side view of the automated guided vehicle.
Fig. 5 is a view illustrating a state where the automated guided vehicle has slipped under the caged cart.
Fig. 6 is a view illustrating a state where the automated guided vehicle is coupled to the caged cart.
Fig. 7 is a block diagram of an automated guided vehicle system including the automated guided vehicle and a management device.
Fig. 8 is a flowchart illustrating an example of a conveyance control routine.
Fig. 9 is a view illustrating a state where a conveyance target cart is conveyed from among densely arranged caged carts.
Fig. 10 is a view illustrating a state where the conveyance target cart is conveyed from among densely arranged caged carts.
Fig. 11 is a view illustrating a state where the conveyance target cart is conveyed from among densely arranged caged carts.
Fig. 12 is a view illustrating a state where the conveyance target cart is conveyed from among densely arranged caged carts.
Fig. 13 is a view illustrating a state where the conveyance target cart is conveyed from among densely arranged caged carts.
Fig. 14 is a view illustrating a state where the conveyance target cart interferes with an adjacent caged cart.
Fig. 15 is a view illustrating a state where the conveyance target cart interferes with the adjacent caged cart.
Fig. 16 is a flowchart illustrating a conveyance control routine of a modification of Fig. 8.
Fig. 17 is a flowchart illustrating a conveyance control routine according to another embodiment.
Fig. 18 is a flowchart illustrating a conveyance control routine of a modification of Fig. 17.
Fig. 19 is a view illustrating another arrangement example of caged carts.

### Description of Embodiments

Next, embodiments for practicing the present disclosure will be described with reference to the drawings.

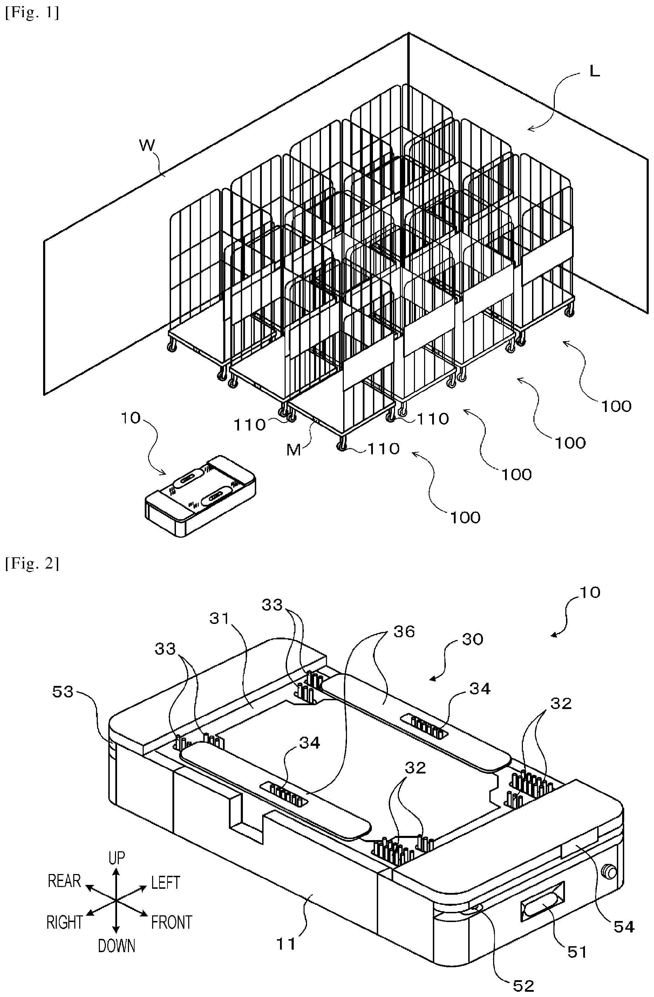

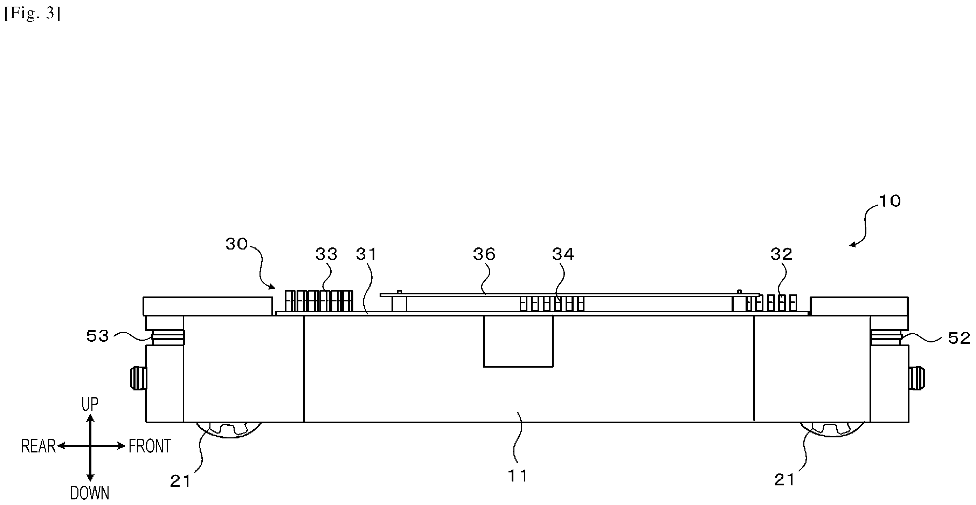

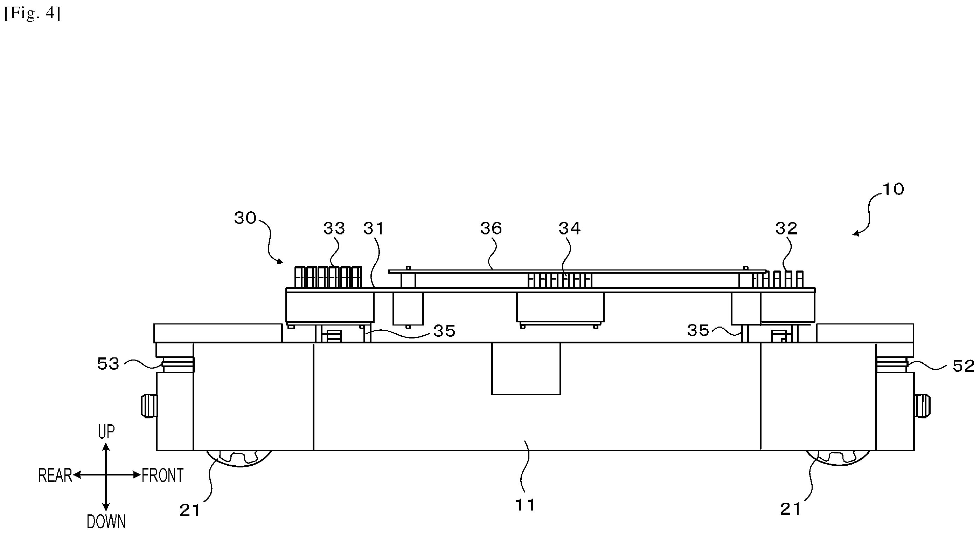

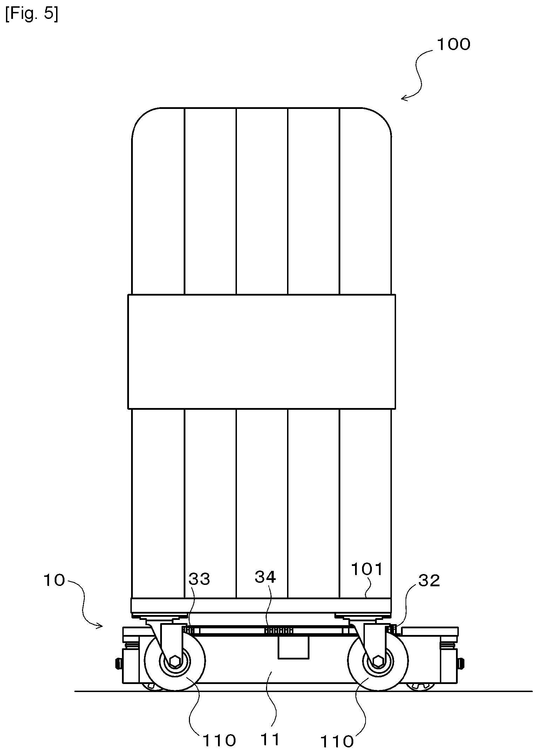

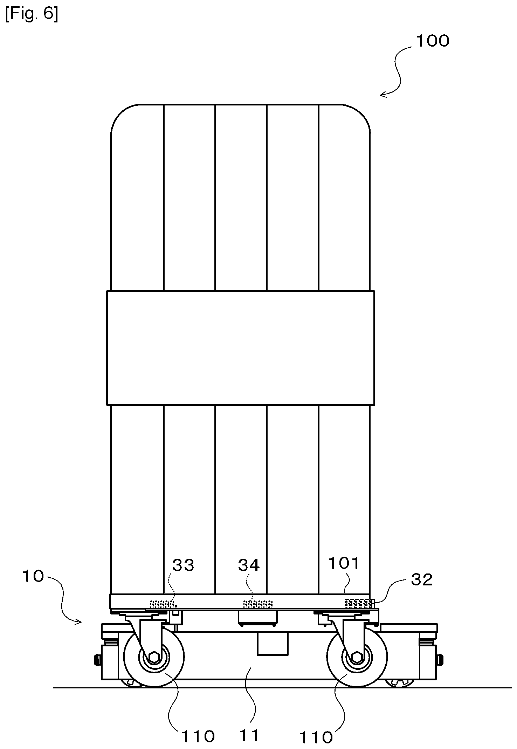

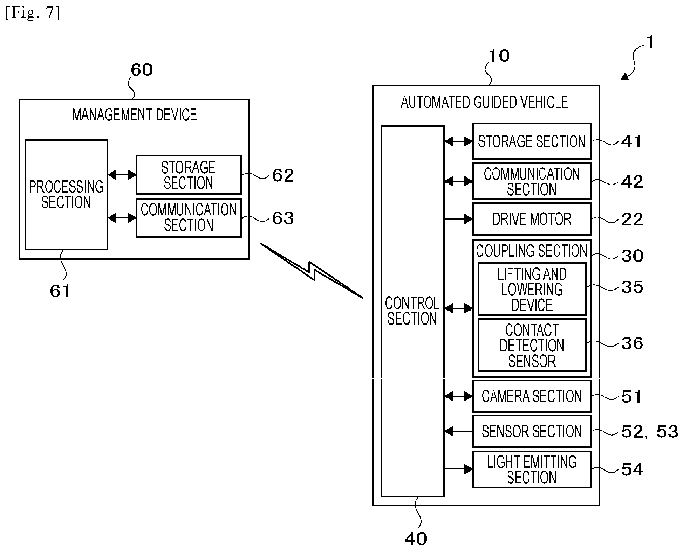

Fig. 1 is an external perspective view of multiple caged carts 100 densely arranged in cart storage area L and automated guided vehicle 10 that conveys caged carts 100. Fig. 2 is an external perspective view of automated guided vehicle 10. Figs. 3 and 4 are side views of automated guided vehicle 10. Fig. 5 is a view illustrating a state where automated guided vehicle 10 has slipped under caged cart 100. Fig. 6 is a view illustrating a state where automated guided vehicle 10 is coupled to caged cart 100. Fig. 7 is a block diagram of automated guided vehicle system 1 including automated guided vehicle 10 and management device 60.

Automated guided vehicle 10 of the present embodiment is an autonomous mobile robot (AMR) that is used in a logistics center, a warehouse, a store, or the like, and as illustrated in Fig. 1, that is capable of autonomously traveling while coupled to and conveying caged cart 100. As illustrated in Fig. 7, automated guided vehicle system 1 includes automated guided vehicle 10 and management device 60 that manages the operation of automated guided vehicle 10.

For example, as illustrated in Fig. 1, caged cart 100 is a caged cart including a rectangular and mesh-like loading platform portion 101 on which cargo can be loaded and multiple (for example, four) casters 110 rotatably attached to a lower surface of loading platform portion 101. Loading platform portion 101 of caged cart 100 is provided with marker M such as an AR marker, a two-dimensional code, or a barcode for identifying caged cart 100. Automated guided vehicle 10 reads marker M to recognize caged cart 100 (conveyance target cart) to be conveyed. Marker M may be attached to the cargo loaded on loading platform portion 101. Automated guided vehicle 10 may be configured to recognize the outline of caged cart 100 instead of marker M.

As illustrated in Fig. 2, automated guided vehicle 10 of the present embodiment has a flat rectangular parallelepiped appearance with a low height. Automated guided vehicle 10 includes vehicle body portion 11, multiple (for example, four) wheels 21 rotatably attached to a bottom surface of vehicle body portion 11, and multiple (for example, four) drive motors 22 (see Fig. 7) that rotationally drive corresponding wheels 21. In the present embodiment, multiple wheels 21 are configured as mecanum wheels having multiple rollers rotatable around an axis inclined by 45 degrees with respect to the rotation axis of the wheel on the outer periphery of the wheel. Automated guided vehicle 10 can move vehicle body portion 11 in all directions or make vehicle body portion 11 turn (such as a spin turn, a pivot turn, or a power turn) by independently controlling the rotation direction and the rotation speed of corresponding wheels 21 with multiple drive motors 22. Multiple wheels 21 may also be configured as omni wheels having multiple rollers that are rotatable around an axis that intersects three-dimensionally with respect to the rotation axis of the wheel. In other words, multiple wheels 21 may be any type of wheel as long as the wheels are capable of moving or turning vehicle body portion 11 in multiple directions.

As illustrated in Figs. 3 and 4, automated guided vehicle 10 includes coupling section 30 that is provided on the upper surface of vehicle body portion 11 and can be coupled to caged cart 100 in a state where vehicle body portion 11 has slipped under caged cart 100. Coupling section 30 includes flat-shaped lifting and lowering plate 31, coupling pins 32, 33, and 34 provided to extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 to cover the upper surface of vehicle body portion 11 and a front-rear width slightly shorter than a front-rear width of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 5 and 6, coupling section 30 lifts lifting and lowering plate 31 by lifting and lowering device 35 in a state where vehicle body portion 11 has slipped under caged cart 100, thereby engaging at least one of coupling pins 32, 33, and 34 with the underside of loading platform portion 101 of caged cart 100. Accordingly, automated guided vehicle 10 and caged cart 100 are coupled to each other, and automated guided vehicle 10 can convey (tow) caged cart 100.

As illustrated in Figs. 2 to 4, contact detection sensors 36 (spring sensors) for detecting that coupling section 30 (coupling pins 32, 33, and 34) is in contact with (coupled to) loading platform portion 101 of caged cart 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 are engaged with loading platform portion 101 of caged cart 100, the plate of contact detection sensor 36 comes into contact with loading platform portion 101, and is lowered relative to coupling pins 32, 33, and 34 while the spring is compressed. Contact detection sensor 36 detects that coupling section 30 is in contact with (coupled to) loading platform portion 101 of caged cart 100 by detecting a state where the plate is relatively lowered.

Furthermore, as illustrated in Fig. 7, automated guided vehicle 10 includes control section 40 responsible for overall control, storage section 41 that stores various information including map information, communication section 42 for performing communication (wireless communication) with management device 60 and other automated guided vehicles, camera section 51 as an imaging device, sensor sections 52 and 53, and light emitting section 54 that illuminates the front of vehicle body portion 11. Camera section 51 is installed on the front surface of vehicle body portion 11 to recognize the area in front of vehicle body portion 11. Sensor sections 52 and 53 are installed on the front surface and the rear surface of vehicle body portion 11 to detect surrounding obstructions. Sensor sections 52 and 53 detect surrounding objects and a distance to the objects. In the present embodiment, as sensor sections 52 and 53, a light detection and ranging (LiDAR) sensor is used that scans the surrounding area with laser light, receives each reflected light, measures the time until the reflected light is received, thereby measuring distance data for each scanning angle, and obtaining surrounding point cloud data. Light emitting section 54 is installed on the front surface of vehicle body portion 11, and illuminates the front to make it easier for camera section 51 to recognize surrounding objects in dark environments.

Control section 40 is configured as a microprocessor centered on CPU, and includes ROM storing a processing program, RAM temporarily storing data, a timing section, and the like in addition to the CPU. As illustrated in Fig. 7, an image signal from camera section 51, detection signals from sensor sections 52 and 53 and contact detection sensor 36, and the like are input to control section 40. Control section 40 outputs control signals to drive motor 22 and lifting and lowering device 35.

As illustrated in Fig. 7, management device 60 includes processing section 61, storage section 62 that stores various information including map information, and communication section 63 for performing communication (wireless communication) with each automated guided vehicle 10. Processing section 61 is configured as a microprocessor centered on CPU, and includes ROM storing a processing program, RAM temporarily storing data, and the like in addition to the CPU.

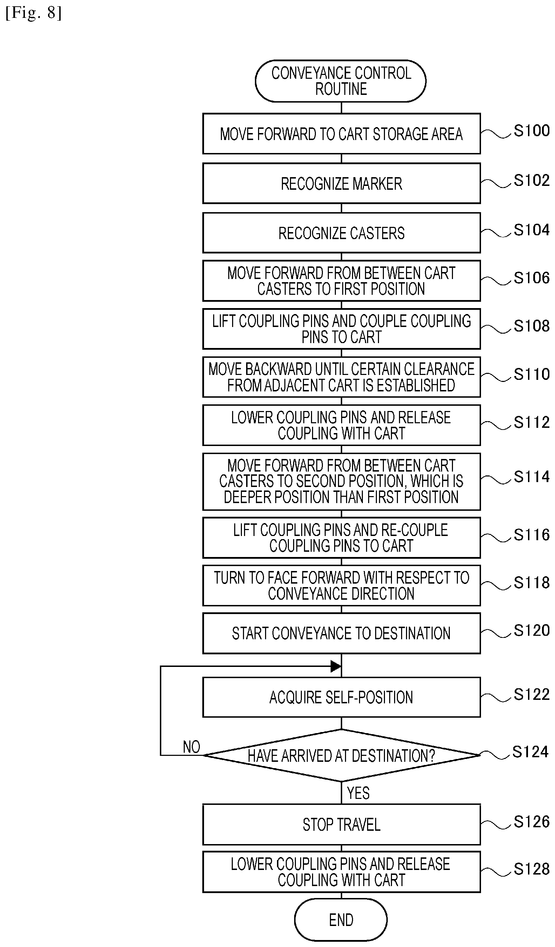

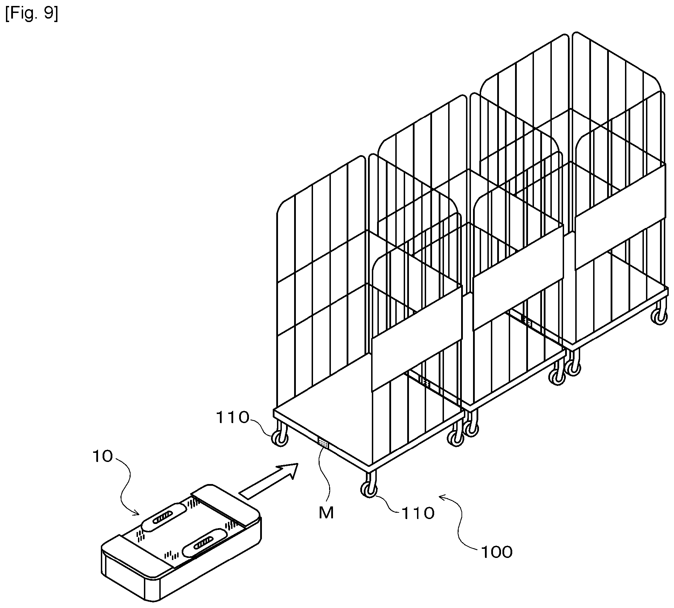

Next, an operation of automated guided vehicle 10 of the present embodiment configured as described above will be described. In particular, as illustrated in Fig. 1, the operation will be described, in which one caged cart 100 (conveyance target cart) is coupled from among multiple caged carts 100 arranged in a densely packed state against wall W of cart storage area L, and the conveyance target cart is conveyed (towed) to a destination. Fig. 8 is a flowchart illustrating an example of a conveyance control routine executed by control section 40 of automated guided vehicle 10. This process is executed when management device 60 instructs the conveyance of caged cart 100 (cargo). Hereinafter, the conveyance control routine will be described with reference to Figs. 9 to 13.

When the conveyance control routine is executed, control section 40 first causes drive motor 22 to make vehicle body portion 11 approach cart storage area L while facing forward by forward traveling (S100, Fig. 9). Subsequently, control section 40 recognizes caged cart 100 (conveyance target cart) to be conveyed by recognizing marker M attached to caged cart 100 or the cargo placed on loading platform portion 101 with camera section 51 provided on the front surface of vehicle body portion 11 (S102). Control section 40 may be configured to recognize the conveyance target cart based on the point cloud data detected by sensor section 52 instead of camera section 51.

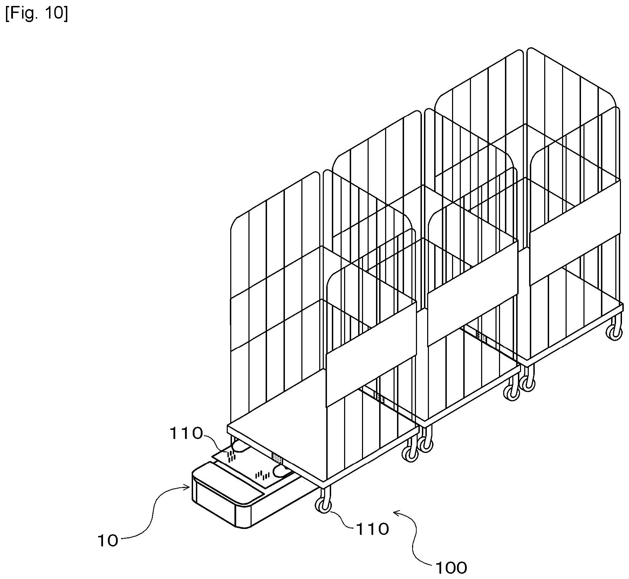

Next, control section 40 recognizes casters 110 of the recognized conveyance target cart (S104). This process is performed by recognizing two objects (casters 110) below the position where marker M is recognized by camera section 51 based on the point cloud data detected by sensor section 52. In addition to recognizing casters 110 by a combination of camera section 51 and sensor section 52, control section 40 may be configured to recognize two objects (casters 110) based solely on the point cloud data detected by sensor section 52. Then, control section 40 causes drive motor 22 to make vehicle body portion 11 slip under the conveyance target cart from between casters 110 of the conveyance target cart by forward traveling (S106, Fig. 10). In the present embodiment, control section 40 causes drive motor 22 to move forward to a first position shallower than a position directly below the conveyance target cart and stop. This control can be performed, for example, by measuring the distance from vehicle body portion 11 to casters 110 by sensor section 52 and moving vehicle body portion 11 forward by a predetermined forward movement amount from a state where the measured distance is a predetermined distance.

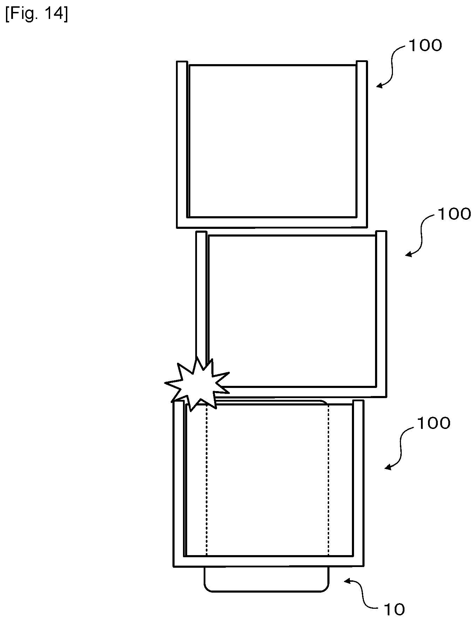

Next, control section 40 causes coupling pins 32, 33, and 34 to be lifted by lifting and lowering device 35 to engage with loading platform portion 101 of the conveyance target cart, thereby coupling the conveyance target cart (S108). Since coupling pins 32, 33, and 34 are respectively provided at the front portion, the rear portion, and the intermediate portion in the front-rear direction on the upper surface of vehicle body portion 11, the conveyance target cart can be coupled to vehicle body portion 11 as long as a part of vehicle body portion 11 is caused to slip under the conveyance target cart. In the present embodiment, the front-rear width of vehicle body portion 11 is larger than the front-rear width of the conveyance target cart. Therefore, when vehicle body portion 11 is caused to slip into a deep position under the conveyance target cart (a second position described later), as illustrated in Fig. 14, vehicle body portion 11 may protrude from the conveyance target cart and interfere (collide) with casters 110 of adjacent caged cart 100. In the present embodiment, when coupling the conveyance target cart, since a part of vehicle body portion 11 is caused to slip under the conveyance target cart (first position), it is possible to prevent vehicle body portion 11 from interfering (colliding) with casters 110 of caged cart 100 adjacent to the conveyance target cart.

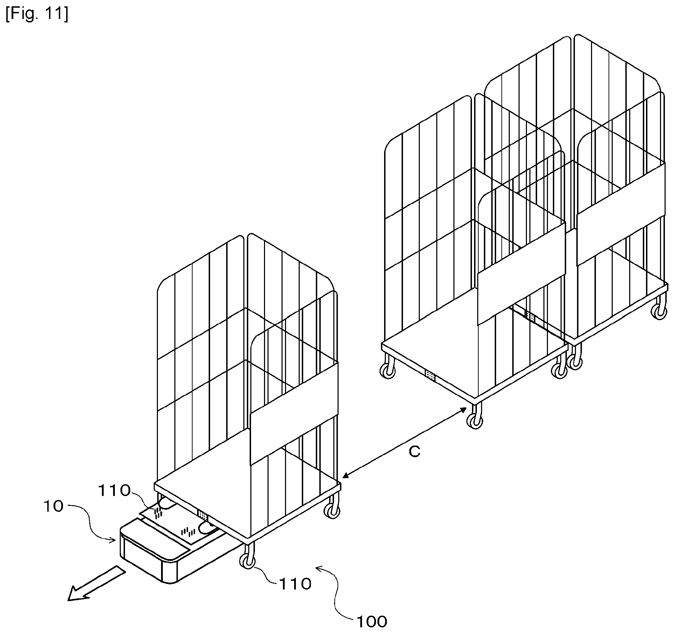

Subsequently, control section 40 causes drive motor 22 to make the coupled conveyance target cart move backward until certain clearance C is established from adjacent caged cart 100 (S110, Fig. 11). In the present embodiment, this process is performed by moving backward by a predetermined backward movement amount. Then, control section 40 causes coupling pins 32, 33, and 34 to be lowered by lifting and lowering device 35 and temporarily releases the coupling with the conveyance target cart (S112).

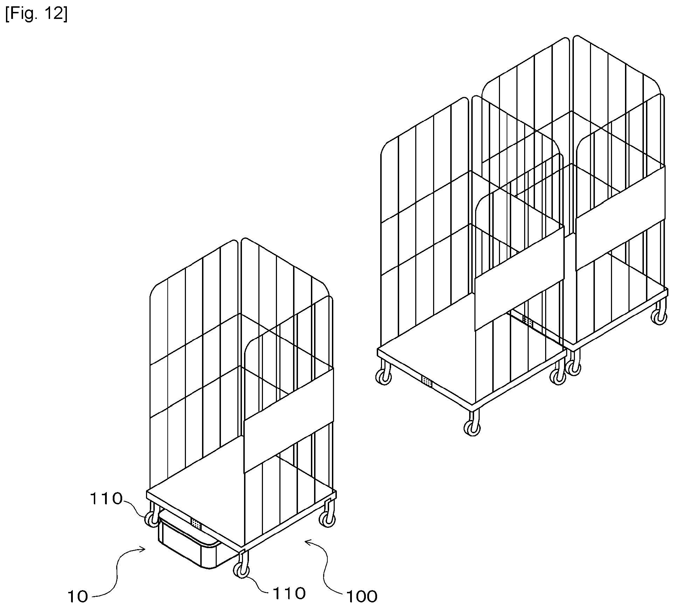

Next, control section 40 causes drive motor 22 to make vehicle body portion 11 slip into the second position, which is a further deeper position under the conveyance target cart (a position immediately below the conveyance target cart) by forward traveling (S114, Fig. 12). In the present embodiment, control section 40 can perform the control by moving vehicle body portion 11 forward by a predetermined amount from the first position. Subsequently, control section 40 causes coupling pins 32, 33, and 34 to be lifted by lifting and lowering device 35 to engage with loading platform portion 101 of the conveyance target cart, thereby re-coupling the conveyance target cart (S116).

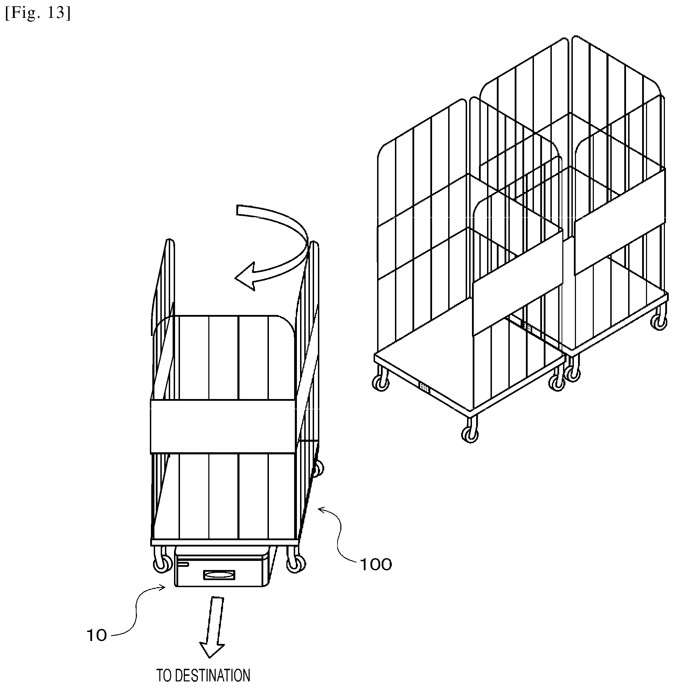

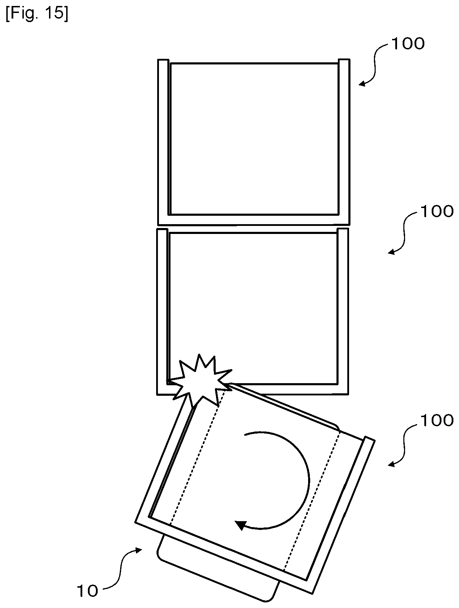

Next, control section 40 acquires the conveyance route, and causes drive motor 22 to face forward with respect to the conveyance direction to turn (for example, spin turn) vehicle body portion 11 (S118, Fig. 13). Then, control section 40 causes drive motor 22 to start conveyance to the destination along the conveyance route (S120). When automated guided vehicle 10 turns in a state where the conveyance target cart coupled to automated guided vehicle 10 and caged cart 100 adjacent to the conveyance target cart approach each other, the conveyance target cart interferes (collides) with adjacent caged cart 100 as illustrated in Fig. 15. In the present embodiment, since constant clearance C is established between the conveyance target cart and caged cart 100 adjacent to the conveyance target cart, it is possible to avoid collisions between the conveyance target cart and caged cart 100 adjacent to the conveyance target cart and smoothly convey the conveyance target cart when automated guided vehicle 10 turns.

The acquisition of the conveyance route is performed by obtaining the surrounding shape based on the point cloud data measured by sensor sections 52 and 53 (LiDAR), recognizing the current location of the vehicle by comparing (collating) the obtained surrounding shape with the map information stored in storage section 41, and searching the route using the map information based on the recognized current location and the designated destination. In the acquisition of the conveyance route, the current location may be recognized and transmitted to the management device, and the conveyance route generated by the management device based on the current location may be received. Further, the acquisition of the conveyance route may be performed at any timing as long as it is between the start of the execution of the conveyance control routine and the start of the processing of S120. When the conveyance of the conveyance target cart starts, control section 40 acquires self-position (S122) and determines whether the conveyance target cart has arrived at the destination (S124). When it is determined that the conveyance target cart has not arrived at the destination, control section 40 returns to S122 and continues traveling. On the other hand, when it is determined that the conveyance target cart has arrived at the destination, control section 40 stops traveling (S126), releases the coupling with the conveyance target cart (S128), and ends this routine.

Here, a correspondence relationship between main elements of the embodiment and main elements of the present disclosure described in the claims will be described. That is, caged cart 100 (conveyance target cart) of the present embodiment is an example of a cart of the present disclosure, drive motor 22 is an example of a drive section, vehicle body portion 11 is an example of a vehicle body portion, coupling section 30 (coupling pins 32, 33, and 34) is a coupling section, and control section 40 corresponds to an example of a control section. Sensor sections 52 and 53 are an example of a detection section.

It is needless to say that the present disclosure is not limited to the embodiment described above in any way, and hence may be practiced in various ways as long as it falls within the technical scope of the present disclosure.

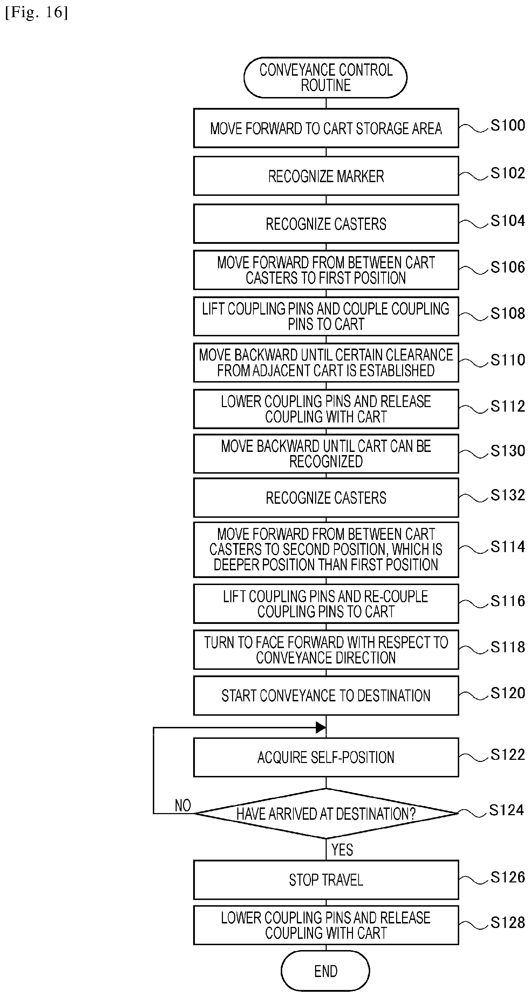

For example, in the embodiment described above, control section 40 causes drive motor 22 to make vehicle body portion 11 slip into the second position under the conveyance target cart by forward traveling, after the processing of S112 in the conveyance control routine of Fig. 8. However, as illustrated in the conveyance control routine of the modification example of Fig. 16, after the processing of S112, control section 40 may move vehicle body portion 11 backward to a position where the conveyance target cart can be recognized (S130), recognize casters 110 of the conveyance target cart (S132), and cause drive motor 22 to make vehicle body portion 11 slip into the second position under the conveyance target cart by forward traveling from between casters 110 (S114).

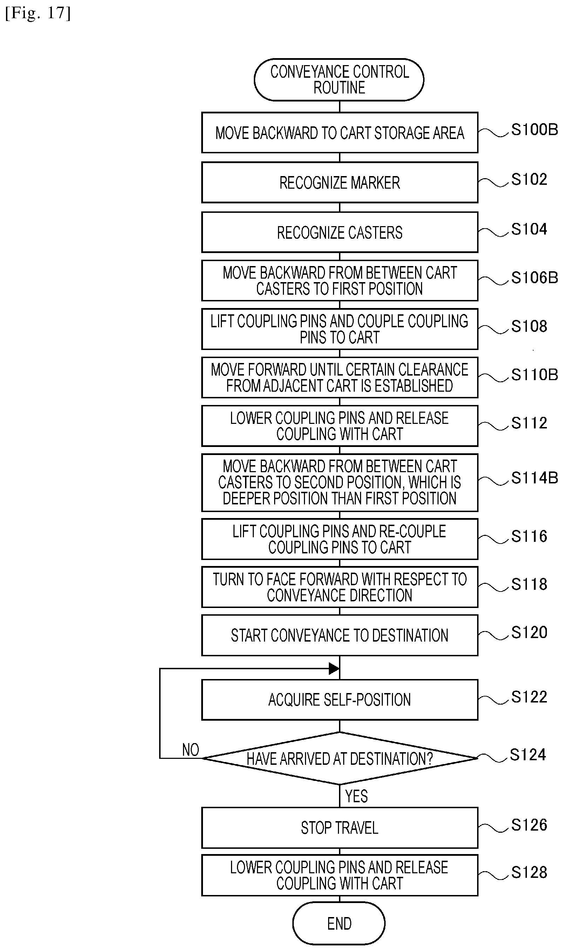

Further, in the embodiment described above, control section 40 is configured to approach the conveyance target cart by forward traveling and couple to the conveyance target cart, and establish constant clearance C between the conveyance target cart and adjacent caged cart 100 by moving backward. However, control section 40 may be configured to approach the conveyance target cart by backward traveling and couple to the conveyance target cart, and establish constant clearance C between the conveyance target cart and adjacent caged cart 100 by moving forward. Fig. 17 is a flowchart illustrating a conveyance control routine according to another embodiment. Among the processes in the routine of Fig. 17, the same processes as those in the routine of Fig. 8 described above are denoted by the same step numbers. Further, the detailed description of the same processes will be omitted to avoid redundancy.

In the conveyance control routine according to another embodiment, control section 40 causes drive motor 22 to make vehicle body portion 11 approach cart storage area L while facing backward by backward traveling (S100B). Subsequently, control section 40 recognizes marker M of caged cart 100 (conveyance target cart) placed in cart storage area L and recognizes casters 110 of the conveyance target cart (S102 and S104). Automated guided vehicle 10 may include a camera section (recognition section) on the rear surface of vehicle body portion 11, and control section 40 may recognize marker M by the camera section. Control section 40 causes drive motor 22 to make vehicle body portion 11 slip from between casters 110 of the conveyance target cart by backward traveling, causing vehicle body portion 11 to slip into the first position under the conveyance target cart (S106B). Next, control section 40 causes vehicle body portion 11 to be coupled to the conveyance target cart (S108) and causes drive motor 22 to make the coupled conveyance target cart move forward until certain clearance C is established from adjacent caged cart 100 (S110B). Then, control section 40 temporarily releases the coupling with the conveyance target cart (S112), and causes drive motor 22 to make vehicle body portion 11 slip into the second position, which is a further deeper position under the conveyance target cart (a position immediately below the conveyance target cart) by backward traveling (S114B).

Next, control section 40 causes vehicle body portion 11 to be re-coupled to the conveyance target cart (S116). Subsequently, control section 40 causes drive motor 22 to turn vehicle body portion 11 to face forward with respect to the conveyance direction of the conveyance route (S118), and then causes drive motor 22 to start conveyance to the destination along the conveyance route (S120 to S128). As described above, by approaching and coupling to the conveyance target cart by backward traveling, and establishing constant clearance C between the conveyance target cart and adjacent caged cart 100 by forward traveling, it is possible to reduce the turning amount to face forward with respect to the subsequent conveyance route.

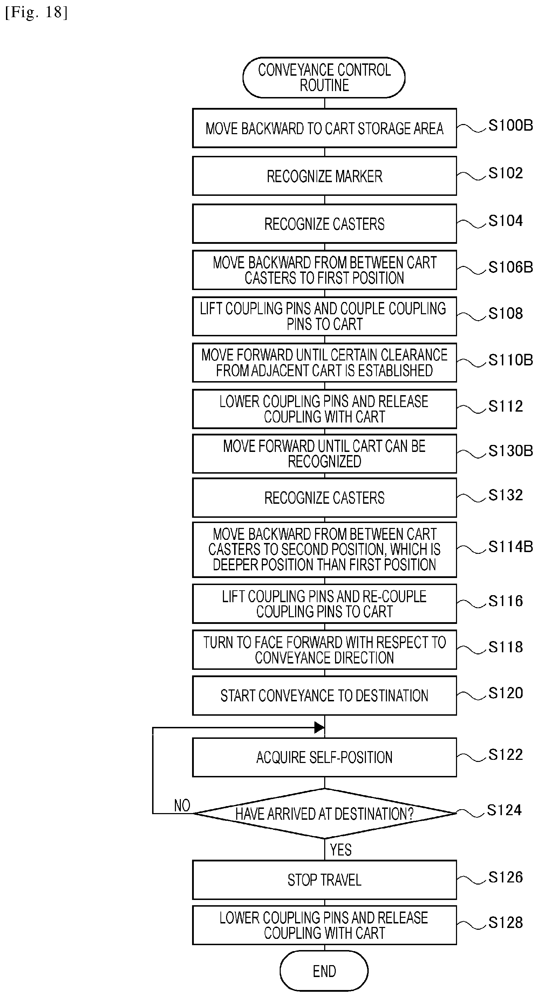

In another embodiment, control section 40 causes drive motor 22 to make vehicle body portion 11 slip into the second position under the conveyance target cart by backward traveling, after the processing of S112. However, as illustrated in the conveyance control routine of the modification example of Fig. 18, after the processing of S112, control section 40 may move vehicle body portion 11 forward to a position where the conveyance target cart can be recognized (S130B), recognize casters 110 of the conveyance target cart (S132), and cause drive motor 22 to make vehicle body portion 11 slip into the second position under the conveyance target cart by backward traveling from between casters 110 (S114B).

After coupling the conveyance target cart to vehicle body portion 11, control section 40 may detect obstacles around vehicle body portion 11 by sensor sections 52 and 53 and move vehicle body portion 11 to an area free of obstacles, thereby establishing certain clearance C between the conveyance target cart and adjacent caged cart 100.

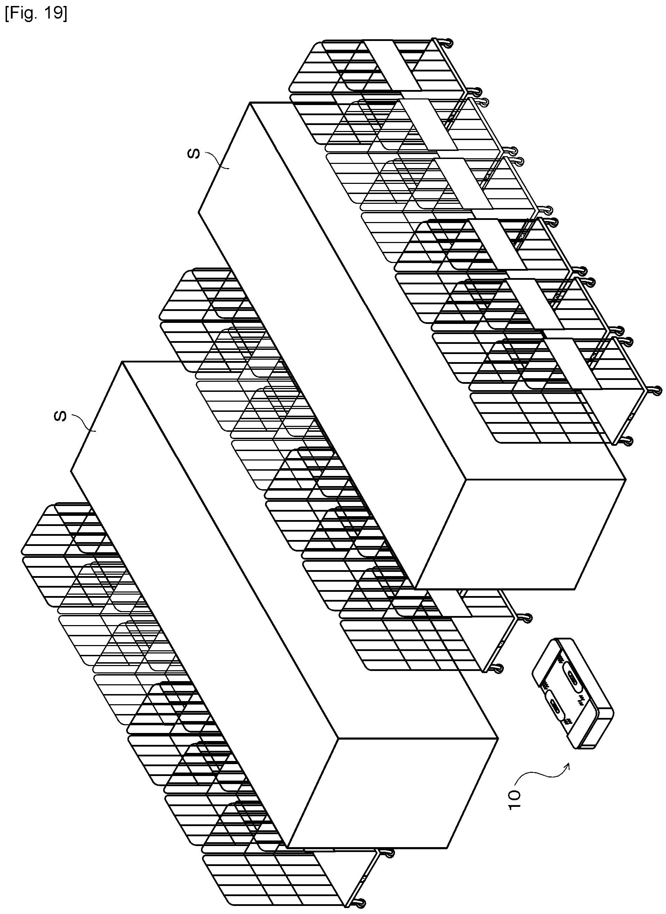

In the embodiment described above, the conveyance target cart is coupled from among multiple caged carts 100 arranged in a densely packed state at the corner surrounded by wall W, serving as cart storage area L, and then conveyed. However, as illustrated in Fig. 19, it is sufficient to couple and convey one caged cart 100 from among multiple caged carts 100 (carts) densely arranged, such as coupling and conveying the conveyance target cart from among multiple caged carts 100 arranged in a densely packed state in a space between multiple shelves S extending in parallel.

In the embodiment described above, when control section 40 causes the conveyance target cart to be spaced apart from adjacent caged cart 100, a part of vehicle body portion 11 is caused to slip under the conveyance target cart and be coupled to the conveyance target cart. However, when the size of vehicle body portion 11 completely fits under loading platform portion 101 of the conveyance target cart, the control section may cause vehicle body portion 11 to completely slip under the conveyance target cart and be coupled to the conveyance target cart. In this case, after coupling the conveyance target cart from among densely arranged multiple caged carts 100 to vehicle body portion 11 and causing the conveyance target cart to be spaced apart from adjacent caged cart 100, control section 40 may convey the conveyance target cart to the destination without temporarily releasing the coupling with the conveyance target cart.

In the embodiment described above, control section 40 measures the distance from vehicle body portion 11 to casters 110 of the conveyance target cart by sensor section 52 provided on the front surface of vehicle body portion 11, and controls the position (depth) where vehicle body portion 11 slips into the conveyance target cart based on the measured distance. However, automated guided vehicle 10 may include an object detection sensor on the upper portion of vehicle body portion 11, with an upward detection range, and control section 40 may control the position (depth) where vehicle body portion 11 slips into the conveyance target cart based on a detection result by the object detection sensor. For example, the position where vehicle body portion 11 slips into the conveyance target cart may be controlled by moving vehicle body portion 11 by a predetermined amount after the object detection sensor detects loading platform portion 101 of the conveyance target cart.

In the embodiment described above, automated guided vehicle 10 is configured to tow caged cart 100 by engaging coupling pin 34 of coupling section 30 with loading platform portion 101 of caged cart 100. However, automated guided vehicle 100 may lift and convey caged cart 100 using coupling section 30.

As described above, the automated guided vehicle of the present disclosure is coupled to the conveyance target cart from among multiple densely arranged carts and moves the conveyance target cart to be spaced apart from an adjacent cart, and then conveys the conveyance target cart to the destination. Accordingly, it is possible to convey the conveyance target cart from among multiple densely arranged carts to the destination without interfering with other carts.

In the automated guided vehicle of the present disclosure, the coupling section may be provided on an upper portion of the vehicle body portion, and the control section controls the coupling section and the drive section such that the vehicle body portion is slipped into a position shallower than a predetermined position under the conveyance target cart, is coupled to the conveyance target cart to move the conveyance target cart to be spaced apart from the adjacent cart, and is then temporarily released coupling with the conveyance target cart, and the vehicle body portion is slipped into the predetermined position and re-coupled to the conveyance target cart to convey the conveyance target cart to the destination. In this way, it is possible to prevent the vehicle body portion from interfering with another adjacent cart when the vehicle body portion is caused to be slipped into the shallow position under the conveyance target cart and is coupled to the conveyance target cart from the state where multiple carts are densely arranged. In addition, after the conveyance target cart is spaced apart from another adjacent cart, the conveyance target cart can be more reliably coupled to the vehicle body portion by causing the vehicle body portion to be slipped into a deep position under the conveyance target cart.

In this case, a detection section may be configured to detect a distance between the conveyance target cart and the vehicle body portion, in which the control section causes the drive section to make the vehicle body portion slip into a target position under the conveyance cart based on a detection result of the detection section. In this way, it is possible to more accurately control the position where the vehicle body portion slips in.

In addition, in the automated guided vehicle of the present disclosure, the control section may cause the drive section to approach the conveyance target cart by forward traveling and to be coupled to the conveyance target cart, and then to move the conveyance target cart to be spaced apart from the adjacent cart by backward traveling, or may cause the drive section to approach the conveyance target cart by backward traveling and to be coupled to the conveyance target cart, and then to move the conveyance target cart to be spaced apart from the adjacent cart by forward traveling. In this way, simple control enables the conveyance target cart to be spaced apart from the adjacent cart.

In the automated guided vehicle of the present disclosure, the control section may cause the drive section to move the conveyance target cart to be spaced apart from the adjacent cart and then to turn and to convey the conveyance target cart to the destination by forward traveling. In this way, the conveyance target cart can be conveyed more smoothly.

The present description discloses a technical idea in which the "automated guided vehicle according to any one of Claims 1 to 3" in Claim 6 originally filed is changed to the "automated guided vehicle according to any one of Claims 1 to 5".

### Industrial Applicability

The present disclosure can be applied to a manufacturing industry of an automated guided vehicle and the like.

### Reference Signs List

1: automated guided vehicle system, 10: automated guided vehicle, 11: vehicle body portion, 21: wheel, 22: drive motor, 30: coupling section, 31: lifting and lowering plate, 32, 33, 34: coupling pin, 35: lifting and lowering device, 36: contact detection sensor, 40: control section, 41: storage section, 42: communication section, 51: camera section, 52, 53: sensor section, 54: light emitting section, 60: management device, 61: processing section, 62: storage section, 63: communication section, 100: caged cart, 101: loading platform portion, 110: caster, L: cart storage area, M: marker, S: shelf, W: wall.

## Claims

1. An automated guided vehicle for conveying a cart, the automated guided vehicle comprising:
a vehicle body portion including a drive section;
a coupling section configured to be detachably coupled to the cart; and
a control section configured to cause the coupling section and the drive section to be coupled to a conveyance target cart from among multiple densely arranged carts and to move the conveyance target cart to be spaced apart from an adjacent cart, and then to convey the conveyance target cart to a destination.

2. The automated guided vehicle according to Claim 1,
wherein the coupling section is provided on an upper portion of the vehicle body portion, and
the control section controls the coupling section and the drive section such that the vehicle body portion is slipped into a position shallower than a predetermined position under the conveyance target cart, is coupled to the conveyance target cart to move the conveyance target cart to be spaced apart from the adjacent cart, and is then temporarily released coupling with the conveyance target cart, and the vehicle body portion is slipped into the predetermined position and re-coupled to the conveyance target cart to convey the conveyance target cart to the destination.

3. The automated guided vehicle according to Claim 2, further comprising:
a detection section configured to detect a distance between the conveyance target cart and the vehicle body portion,
wherein the control section causes the drive section to make the vehicle body portion slip into a target position under the conveyance cart based on a detection result of the detection section.

4. The automated guided vehicle according to any one of Claims 1 to 3, wherein the control section causes the drive section to approach the conveyance target cart by forward traveling and to be coupled to the conveyance target cart, and then to move the conveyance target cart to be spaced apart from the adjacent cart by backward traveling.

5. The automated guided vehicle according to any one of Claims 1 to 3, wherein the control section causes the drive section to approach the conveyance target cart by backward traveling and to be coupled to the conveyance target cart, and then to move the conveyance target cart to be spaced apart from the adjacent cart by forward traveling.

6. The automated guided vehicle according to Claims 1 to 3, wherein the control section causes the drive section to move the conveyance target cart to be spaced apart from the adjacent cart and then to turn and to convey the conveyance target cart to the destination by forward traveling.
